(19) Europäisches Patentamt
European Patent Office
Office européen des brevets

(11) **EP 1 313 281 B1**

(12) **EUROPÄISCHE PATENTSCHRIFT**

(45) Veröffentlichungstag und Bekanntmachung des Hinweises auf die Patenterteilung:
**02.02.2005 Patentblatt 2005/05**

(51) Int Cl.$^7$: **H04L 27/233**

(21) Anmeldenummer: **01127242.4**

(22) Anmeldetag: **16.11.2001**

(54) **Verfahren und System zur Frequenzoffsetschätzung für Trägermodulierte digitale Kommunikationssysteme**

Method and system for frequency offset estimation in digital carrier-modulated communication systems

Procédé et système pour l'estimation d'un décalage de fréquence dans des systèmes de communication numériques à modulation de porteuse

(84) Benannte Vertragsstaaten:
**AT BE CH CY DE DK ES FI FR GB GR IE IT LI LU MC NL PT SE TR**

(43) Veröffentlichungstag der Anmeldung:
**21.05.2003 Patentblatt 2003/21**

(73) Patentinhaber: **Com-Research GmbH Solutions for Communication Systems 90765 Fürth (DE)**

(72) Erfinder:
• **Meyer, Raimund, Dr.**
**90765 Fürth (DE)**
• **Schober, Robert, Dr.**
**c/o Dept.of elec. & comp.Eng.**
**Toronto, Ontario M5S 3G4 (CA)**
• **Gerstacker, Wolfgang, Dr.**
**90482 Nürnberg (DE)**

(74) Vertreter: **Schurack, Eduard F. et al Hofstetter, Schurack & Skora Balanstrasse 57 81541 München (DE)**

(56) Entgegenhaltungen:
**WO-A-00/30312**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft Verfahren und Systeme zur digitalen Übertragung, bei der die Übertragung durch Modulation einer Trägerfrequenz erfolgt, wie z.B. beim Mobilfunksystem GSM (Global System for Mobile Communication). Sie betrifft insbesondere ein Verfahren und ein System zur Frequenzoffsetschätzung für TDMA-(Time-Division Multiple Access) und/oder FDMA- (Frequency-Division Multiple Access) Übertragung, die zumindest näherungsweise durch Pulsamplitudenmodulation beschreibbar ist.

Bei der trägerfrequenzbasierten digitalen Übertragung über dispersive Kanäle, z.B. über einen Mobilfunkkanal oder Zweidrahtleitungen, treten bei realen Systemen unvermeidliche Abweichungen zwischen der Trägerfrequenz des empfangenen Signals und der im Empfänger wirksamen Referenzfrequenz auf. Ursache dafür sind sowohl Toleranzen in den Frequenznormalen (Oszillatoren) des Senders bzw. Empfängers als auch Frequenzverschiebungen durch örtliche Bewegung von Sender und/oder Empfänger. Der dabei auftretende Effekt wird als Doppler-Effekt bezeichnet und kann sowohl eine einfache Verschiebung der gesendeten Frequenz als auch eine Überlagerung unendlich vieler, infinitesimal kleiner Empfangssignal-Anteile mit unterschiedlichen Frequenzverschiebungen bewirken (Doppler-Spread). Liegt ein solcher Frequenzoffset vor, so nimmt - ohne entsprechende Gegenmaßnahmen - die Leistungsfähigkeit des Empfängers bzgl. der Rückgewinnung der gesendeten Datenfolge deutlich ab. Dies drückt sich in einem Anstieg der Bit- bzw. Blockfehlerrate aus. Bei Kenntnis des Frequenzoffsets können im Empfänger wirksame Maßnahmen zu dessen Kompensation ergriffen und somit die Leistungsfähigkeit des Empfängers deutlich verbessert werden. Hierzu sind einige Verfahren bekannt.

Eine Übersicht zum gegenwärtigen Stand der Technik wird z.B. in U. Mengali and A.N. D'Andrea, "Synchronisation Techniques for Digital Receivers", Plenum Press, New York, 1997 gegeben. Das theoretisch leistungsfähigste Verfahren ("Data Aided Maximum Likelihood Frequency Estimation") erfordert einen zweistufigen Suchalgorithmus und ist sehr rechenaufwendig. Daher kommt dieses Verfahren in der Praxis nicht zum Einsatz. Vereinfachte Varianten davon, die ebenfalls auf datengestützter Schätzung des Frequenzoffsets basieren, wie zum Beispiel offenbart in S. Kay, "A Fast and Accurate Single Frequency Estimator", *IEEE Trans. Acoust. Speech, Signal Processing,* ASSP-37, pp. 1987-1990, Dec. 1989, in M.P. Fitz, "Further Results in the Fast Estimation of a Single Frequency", *IEEE Trans. Comm.,* COM-42, pp. 862-864, March 1994, und in M. Luise and R. Reggiannini, "Carrier Frequency Recovery in All-Digital Modems for Burst-Mode Transmission", *IEEE Trans. Comm.,* COM-43, pp. 1169-1178, March 1995 zeigen gute Leistungsfähigkeit bei akzeptabler Komplexität. Allerdings ist ihre Anwendbarkeit u.a. den folgenden erheblichen Einschränkungen unterworfen:

- Für das Gesamtübertragungssystem wird Intersymbolinterferenz-Freiheit vorausgesetzt (Erfüllung des ersten "Nyquist-Kriteriums")
- Es wird eine reine Phasenmodulation (PSK, Phase-Shift Keying) vorausgesetzt.

Insbesondere die erste Bedingung der Intersymbolinterferenz-Freiheit kann in vielen praktischen Anwendungsfällen (z.B. bei frequenzselektiven Fadingkanälen wie im GSM- Mobilfunk) nicht einmal näherungsweise als erfüllt gelten.

In diesem Zusammenhang sei die WO 00/30312 A erwähnt, die eine Frequenzoffsetschätzung für Flat Fading Kanäle beschreibt. Flat Fading bedeutet, daß keine Intersymbolinterferenz zugelassen ist, mithin die erste Nyquistbedingung erfüllt ist. In der WO 00/30312 A wird das Verfahren bei pilot-symbol-unterstützter Modulation (PSAM) angewendet, bei der einzelne Pilot-Symbole zwischen Datenblöcken übertragen werden. Für Übertragungsverfahren mit Intersymbolinterferenz ist das in der WO 00/30312 A beschriebene Verfahren nicht anwendbar.

Verzerrende Übertragungskanäle und beliebige lineare Modulation sind in einem in U. Dettmar, "Combined Channel Estimation and Frequency Correction for Packet Oriented Mobile Communication Systems", *Proceedings of IEEE International Symposium on Personal, Indoor and Mobile Radio Communication (PIMRC'96),* Taipeh, Taiwan, pp. 334-338, Oct. 1996, beschriebenen Verfahren zugelassen, welches eine gemeinsame Least-Squares-Schätzung von Kanalimpulsantwort und Frequenzoffset durchführt. Dabei wird die Übertragung einer empfangsseitig bekannten Trainingssequenz vorausgesetzt. Bei relativ kleinen Frequenzoffsets und kurzen Trainingssequenzen, wie z.B. beim GSM-Standard der Fall, kann mit diesem Verfahren jedoch keine hinreichend genaue Schätzung des Frequenzoffsets vorgenommen werden.

Ein weiterer entscheidender Nachteil der genannten Verfahren ist, daß diese für den Fall einer Störung des Übertragungskanals durch additives, in der Regel, d.h. im betrachteten Übertragungsspektrum weißes Rauschen (AWGN: Additive White Gaussian Noise) optimiert sind. Diese Annahme trifft in vielen praktischen Übertragungssystemen nicht einmal näherungsweise zu.

Die Aufgabe der vorliegenden Erfindung besteht deshalb darin, ein System und ein Verfahren für eine möglichst zuverlässige Schätzung des Frequenzoffsets in einem trägerfrequenzbasierten digitalen Übertragungssystem (z.B. GSM-Mobilfunksystem) unter folgenden Randbedingungen bereitzustellen:

- es kommt ein (näherungsweise) lineares Modulationsverfahren zum Einsatz wie z.B. QAM (Quadrature Amplitude Modulation), PSK (Phase-Shift Keying) oder GMSK (Gaussian Minimum-Shift Keying), wobei letzteres Modulationsverfahren durch gefilterte BPSK (Binary Phase-Shift Keying) approximiert werden kann,

- das Empfangssignal steht als sogenanntes äquivalentes komplexes Basisbandsignal zur Verfügung,

- die erste Nyquistbedingung ist nicht notwendigerweise erfüllt (d.h. es liegen möglicherweise Intersymbolinterferenzen vor),

- es ist kein besonderes Vorwissen über den Übertragungskanal nötig; es wird nur das Senden einer Trainingssequenz zur empfangsseitigen Schätzung der Kanalimpulsantwort vorausgesetzt,

- die auf dem Übertragungskanal vorliegende Art der Störung (z.B. Rauschen, Nachbar- oder Gleichkanalinterferenz) muss nicht a-priori bekannt sein,

- der Bereich des zu erwartenden Frequenzoffsets, insbesondere der maximal auftretende Frequenzoffset, muss näherungsweise bekannt sein.

Diese Aufgabe wird gelöst durch ein Verfahren mit den Merkmalen von Patentanspruch 1 und durch ein System mit den Merkmalen von Patentanspruch 8.

Das Prinzip der Erfindung ist,

(1) aus dem Empfangssignal eine Anzahl von N weiteren Varianten des Empfangssignals (*Empfangssignal-Derivate*) abzuleiten, welche durch N geeignete unterschiedliche diskrete Frequenzverschiebungen des ursprünglichen Empfangssignals gewonnen werden,
(2) jedes dieser N Empfangssignal-Derivate für eine Rückgewinnung der Sendesymbolfolge durch Entzerrung geeignet aufzubereiten,
(3) eine (zweckmässigerweise aufwandsgünstige) Entzerrung der N Empfangssignal-Derivate durchzuführen,
(4) im Zuge der Entzerrung der N Empfangssignal-Derivate N geeignete Metriken zu bestimmen, welche die Qualität der entzerrten Sendesymbole genau oder näherungsweise widerspiegeln,
(5) durch Auswertung der N Metriken in Verbindung mit den zugehörigen N angewandten Frequenzverschiebungen einen Schätzwert für den Frequenzoffset in geeigneter Weise zu ermitteln.

Im Gegensatz zu einigen der oben erwähnten, aus dem Stand der Technik bekannten Verfahren findet bei der vorliegenden Erfindung keine Schätzung auf der Basis eines Phasenvergleichs statt.

Die Hauptanwendung der vorliegenden Erfindung liegt in der Schätzung des Frequenzoffsets zwischen der Trägerfrequenz des empfangenen Signals und der Referenzfrequenz eines kohärenten Empfängers. Die Erfindung ermöglicht unter bestimmten, noch näher zu erläuternden Randbedingungen eine wesentlich genauere Schätzung des Frequenzoffsets unter Verwendung des Basisbandsignals in trägermodulierten digitalen Übertragungssystemen (z.B. GSM-Standard) als nach dem bisherigen Stand der Technik und ermöglicht in Verbindung mit geeigneten Maßnahmen zur Kompensation des Frequenzoffsets eine erhebliche Steigerung der Leistungsfähigkeit des Empfängers bezüglich der Rückgewinnung der gesendeten Daten. Dies gilt insbesondere für die Übertragung in Anwesenheit eines starken Gleichoder Nachbarkanalstörers, da hier zum Teil spezielle Datenrückgewinnungsverfahren (z.B. Interference Cancellation, Multi-User-Detection) eingesetzt werden, die bereits bei schwach zeitvarianten Kanälen (z.B. durch Vorliegen eines Frequenzoffsets) eine starke Degradation ihrer Leistungsfähigkeit aufweisen können. Das erfindungsgemäße Verfahren erlaubt eine Frequenzoffsetschätzung nicht nur bei Übertragung über einen AWGN-Kanal, sondern auch bei verzerrenden Kanälen, wobei allgemeine lineare Modulationsverfahren zugelassen sind, d.h. keine Einschränkung auf reine Phasenmodulation gegeben ist. Eine hohe Leistungsfähigkeit wird nicht nur bei Störung durch additives weißes Rauschen erreicht, sondern auch bei Interferenzstörungen, sofern die restlichen Komponenten des Empfängers für diesen Fall ausgelegt sind. Zur Gewinnung von Schätzwerten hoher Güte sind für das erfindungsgemäße Verfahren die bei praktischen Mobilfunksystemen wie GSM vorliegenden Trainingssequenzlängen völlig ausreichend.

Weiterhin eignet sich das Verfahren besonders bei blockweiser Datenübertragung, die bei den meisten Mobilfunkstandards (z.B. GSM) eingesetzt wird. Hier ist aufgrund der sich innerhalb weniger Blöcke stark ändernden Eigenschaften des Übertragungskanals (z.B. bei hoher Bewegungsgeschwindigkeit oder dem Einsatz von Frequenzsprungverfahren, *frequency hopping*) eine blockbasierte Schätzung des Frequenzoffsets von Vorteil.

Bei einer besonders bevorzugten Ausführungsform des erfindungsgemäßen Verfahrens werden die Empfangssignal-Derivate unmittelbar aus dem zeitkontinuierlichen Empfangssignal gebildet. In diesem Fall resultiert eine bestmögliche Güte des nachfolgend bestimmten Schätzwertes für den Frequenzoffset.

Alternativ kann die Bildung von Empfangssignal-Derivaten erst nach der Abtastung des zeitkontinuierlichen Empfangssignals erfolgen. In diesem Fall genügt eine einzige zeitkontinuierliche Filterung, was einen verminderten Aufwand in einer Realisierung im Vergleich zur ersten Ausführungsform zur Folge hat.

Bevorzugt erfolgt die letztgenannte Variante erst nach einer zeitdiskreten Vorverarbeitung nach der Abtastung zum Zwecke der Unterdrückung von Störungen, wobei hier insbesondere an Interferenzen zu denken ist. Somit ist eine zeitdiskrete Vorverarbeitung nur für ein einziges Signal durchzuführen, wodurch sich eine weitere Verringerung der Komplexität ergibt.

Besonders bevorzugt ist eine Ausführungsform, bei der der Schätzwert für den Frequenzoffset mittels des Extremwerts einer Kurve gebildet wird, die anhand der mit den N Entzerrungen gewonnenen Metriken und der zugehörigen Frequenzverschiebungen bestimmt wird. Bei dem Extremwert kann es sich beispielsweise um den Scheitelpunkt einer Parabel handeln. Dadurch läßt sich eine Steigerung der Genauigkeit des Schätzwertes für den Frequenzoffset erreichen.

Die Erfindung ermöglicht in einer weiteren Ausführungsform, daß die Bildung und die Entzerrung der Empfangssignal-Derivate nur in einem Teilbereich des empfangenen Signalblocks erfolgt. Somit müssen weniger Signalwerte entzerrt werden, wodurch die für die Entzerrung benötigte Komplexität verringert wird.

Weitere vorteilhafte Ausführungsformen können den Unteransprüchen entnommen werden.

Ein Ausführungsbeispiel der Erfindung wird im folgenden unter Hinweis auf die beigefügten Zeichnungen näher beschrieben. Es stellen dar:

Figur 1 ein Blockschaltbild zur Erzeugung von zeitkontinuierlichen Empfangssignalderivaten, deren Vorverarbeitung einschließlich Abtastung und Entzerrung zur Gewinnung von Metriken zur Schätzung des Frequenzoffsets;

Figur 2 ein Blockschaltbild zur Erzeugung von zeitdiskreten Empfangssignalderivaten, deren Vorverarbeitung und Entzerrung zur Gewinnung von Metriken zur Schätzung des Frequenzoffsets;

Figur 3 ein Blockschaltbild zur Vorverarbeitung des zeitdiskreten Empfangssignals, Erzeugung von Empfangssignalderivaten und Entzerrung zur Gewinnung von Metriken zur Schätzung des Frequenzoffsets;

Figur 4 ein Blockschaltbild zur Gewinnung eines Schätzwertes für den Frequenzoffset aus den Metriken $M_v$;

Figur 5 eine Kennlinie zur Bestimmung eines Schätzwertes für den Frequenzoffset aus den Metriken $M_v$; und

Figur 6 in schematischer Darstellung ein Blockschaltbild für ein Ausführungsbeispiel eines erfindungsgemäßen Systems.

Im folgenden wird ohne Einschränkung der Allgemeinheit angenommen, daß das Empfangssignal in der sogenannten Basisbanddarstellung entweder in zeitkontinuierlicher Form y(t) oder in zeitdiskreter Form als Folge y[k] vorliegt. Für die zeitdiskrete Darstellung als Folge y[k] wird äquidistante Abtastung im Sendesymboltakt 1/T angenommen, d.h. y[k] = y(t=kT). Weiterhin wird angenommen, daß der Betrag des maximal zu erwartenden Frequenzoffsets $\Delta f_{max}$ bekannt sei. Somit ergibt sich der Bereich des zu erwartenden Frequenzoffsets zu $\Delta f \in [-\Delta f_{max}, +\Delta f_{max}]$.

1.) Erzeugung der Empfanossignal-Derivate

Zunächst werden N diskrete Frequenzverschiebungen $f_v \in \{f_0, f_1, ...., f_{N-1}\}$ bestimmt, welche den oben genannten Bereich in geeigneter Weise abdecken. Für einen Frequenzoffset, der z.B. im Bereich $\Delta f \in [-\Delta f_{max}, +\Delta f_{max}]$ gleichverteilt ist, bietet sich eine Wahl der Frequenzverschiebungen $f_v$ zu

$$f_v = -\Delta f_{max} + (v+0.5) \cdot \frac{2\Delta f_{max}}{N}, \ v \in \{0, 1, ... N-1\} \tag{1}$$

an. Ansonsten kann die Auswahl der $f_v$ auf der Basis der Wahrscheinlichkeitsdichtefunktion des zu erwartenden Frequenzoffsets erfolgen, womit die Stützstellen auch beliebig nichtäquidistant gewählt werden können. Die Wahl der Größe N erfolgt gemäß der zur Verfügung stehenden Signalverarbeitungsresourcen des Empfängers sowie der gewünschten Genauigkeit des Schätzwertes für den Frequenzoffset.

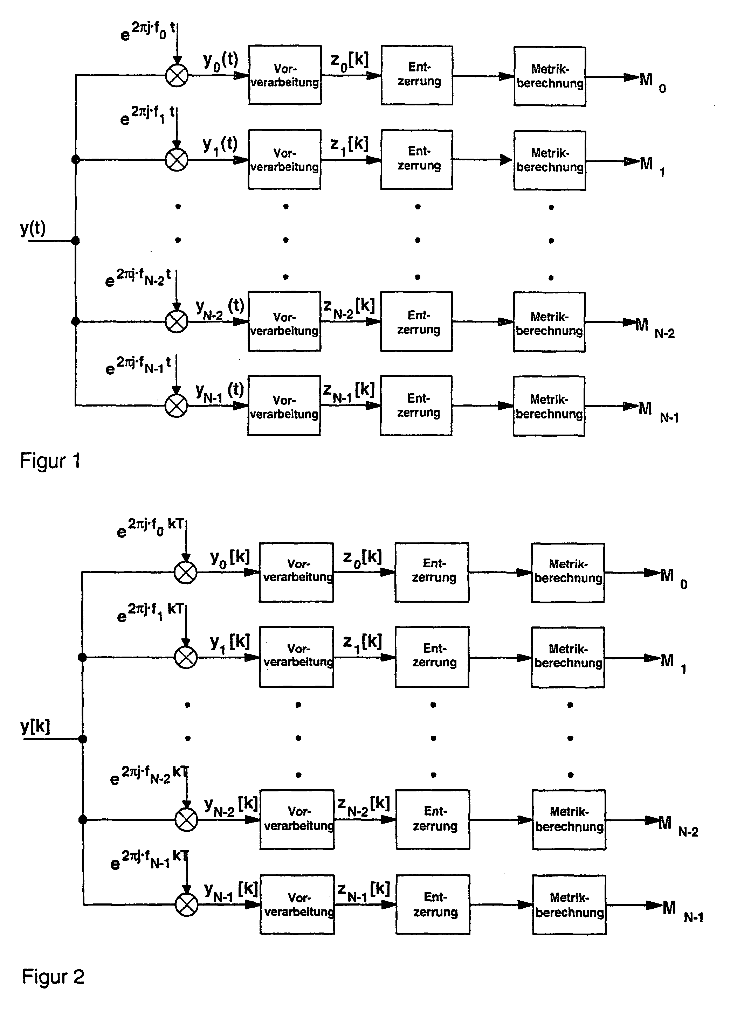

Mittels dieser Werte werden aus dem Empfangssignal N Signale $y_v(t)$ abgeleitet, siehe Figur 1, welche durch Aufbringen der Frequenzverschiebungen $f_v$ auf das ursprüngliche Signal y(t) gewonnen werden:

$$y_v(t) = y(t) \cdot e^{j \cdot 2\pi f_v t} \qquad (2)$$

Für $\Delta f_{max} \ll 1/T$ kann diese Frequenzverschiebung mit vergleichbarer Wirkung auch auf das Signal in zeitdiskreter Form y[k] angewendet werden:

$$y_v[k] = y[k] \cdot e^{j \cdot 2\pi f_v kT}, \qquad (3)$$

vgl. Figur 2. Alternativ kann die entsprechende Operation der Frequenzverschiebung auch direkt auf das trägerfrequente Signal angewandt werden, was jedoch aus praktischen Gründen (N-facher Aufwand bei der Abmischung des Signals in das Basisband) sehr ineffizient ist.

2.) Vorbereitung für die Entzerrung der Empfangssignal-Derivate

Nun wird für jedes dieser Signale eine geeignete Vorverarbeitung gemäß dem eingesetzten Entzerrungsverfahren (siehe Punkt 3: Entzerrung) durchgeführt. Diese Vorverarbeitung, z.B. Matched-Filterung, Abtastung, Kanalschätzung, vor allem aber digitale Filterung zur Unterdrückung von Störsignalen, z.B. Interferenzen, wird entsprechend dem Stand der Technik durchgeführt und ist nicht Gegenstand der Erfindung.

Die nach der Vorverarbeitung vorliegenden Folgen seien mit $z_v[k]$ bezeichnet.

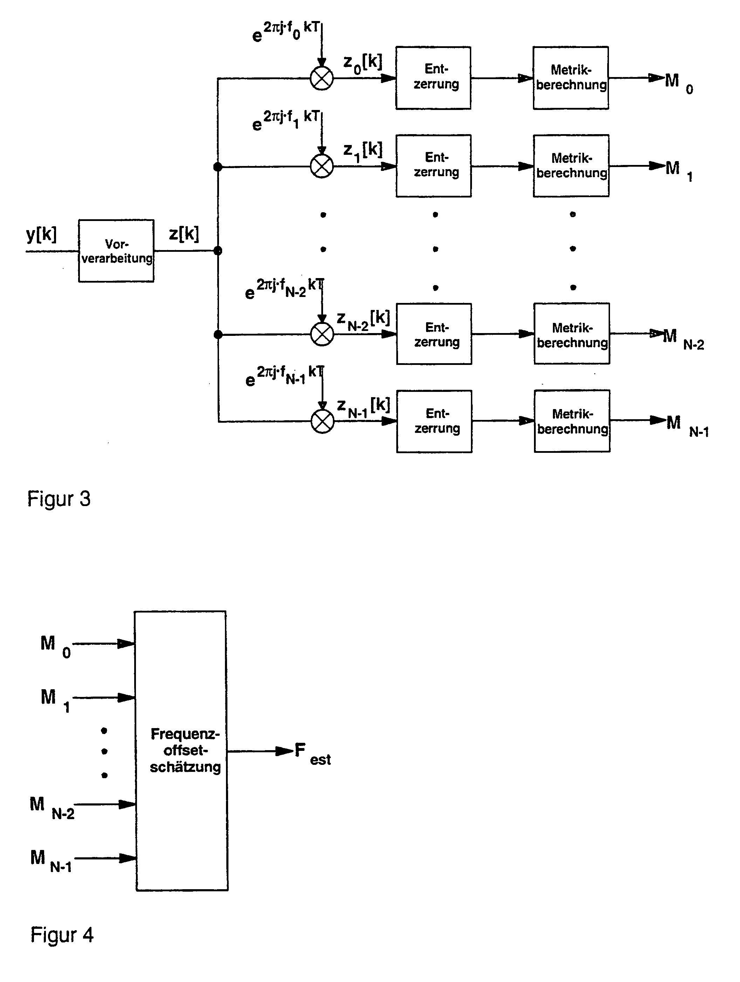

Abhängig von der Größe des zu erwartenden Frequenzoffsets $\Delta f$ und der Anzahl der zur Schätzung verwendeten Abtastwerte kann die Vorverarbeitung (z.B. digitale Vorfilterung des Signals) vorteilhafterweise vor dem Aufbringen der Frequenzverschiebungen durchgeführt werden, siehe Figur 3, was je nach Anwendungsfall zu einer signifikanten Aufwandsreduktion bei kaum beeinträchtigter Schätzgenauigkeit führen kann. Als Beispiel ist hierbei eine digitale Vorfilterung zum Zwecke der Interferenzunterdrückung zu nennen.

3.) Entzerrung der Empfangssignal-Derivate

Nunmehr erfolgt die Entzerrung der zeitdiskreten Empfangssignal-Derivate $z_v[k]$. Hierzu können prinzipiell alle bekannten Verfahren zum Einsatz kommen, wie z.B. lineare Entzerrung, beschrieben zum Beispiel in J.G. Proakis, "Digital Communications", McGraw-Hill, New York, 1989, entscheidungsrückgekoppelte Entzerrung (Decision-Feedback Equalization, DFE), beschrieben zum Beispiel in P. Monsen, "Feedback Equalization for Fading Dispersive Channels", *IEEE Trans. Information Theory,* IT -17, pp. 56-64, Jan. 1971, oder Maximum-Likelihood Sequenzschätzung (Maximum-Likelihood Sequence Estimation, MLSE), beschrieben zum Beispiel in G.D. Forney, Jr., "Maximum-Likelihood Sequence Estimation of Digital Sequences in the Presence of Intersymbol Interference", *IEEE Trans. Information Theory,* IT -18, pp. 363-378, May 1972, sowie zustands- bzw. aufwandsreduzierte Varianten davon (z.B. Reduced-State Sequence Estimation (RSSE), beschrieben beispielsweise in M.V. Eyuboglu and S.U. Qureshi, "Reduced-State Sequence Estimation with Set Partitioning and Decision-Feedback", *IEEE Trans. Comm.,* COM-36, pp. 13-20, Januar 1988, Decision-Feedback Sequence Estimation (DFSE), beschrieben beispielsweise in A. Duel-Hallen and C. Heegard, "Delayed Decision-Feedback Sequence Esti-mation", *IEEE Trans. Comm.,* COM-37, p. 428-436, May 1989).

Die Auswahl des Verfahrens erfolgt gemäß der zur Verfügung stehenden Signalverarbeitungsresourcen des Empfängers sowie der gewünschten Schätzgenauigkeit für den Frequenzoffset. Vorteilhafterweise ist im allgemeinen ein aufwandsgünstiges Verfahren (z.B. DFE oder RSSE) einzusetzen.

4.) Metrik zur Schätzung der Zuverlässigkeit der entzerrten Sendesymbole

Das Ziel der Entzerrung ist primär die Gewinnung einer skalaren Metrik $M_v$ pro Folge $z_v[k]$, welche es erlaubt, die Zuverlässigkeit der entzerrten Sendesymbolsequenz (oder eines Teiles davon) zu schätzen. Es findet somit eine Zuordnung der angewandten Frequenzverschiebungen $f_v$ zu den entsprechenden Metriken $M_v$ statt.

Für die Metrik ist zu fordern, daß sie in einem (zumindest näherungsweise) streng monotonen Zusammenhang zur Zuverlässigkeit der (gesamten oder partiellen) Sequenz der entzerrten Sendesymbole steht. Der absolute Wert der Metriken $M_v$ ist dabei ohne Bedeutung, da lediglich die Position des Minimums zu bestimmen ist, welche den negativen Schätzwert für den Frequenzoffset darstellt (siehe unten).

Im folgenden werden 2 Beispiele für geeignete Metriken angeführt:

Soft-Output Entzerrung:

Bei Soft-Output Entzerrung werden zusätzlich zu Schätzwerten für die Datensymbole noch Schätzwerte für deren Zuverlässigkeit berechnet. Dazu kann z.B. der Maximum A Posteriori Symbol-by-Symbol Estimation (MAPSSE) Algorithmus oder der Soft Output Viterbi Algorithmus (SOVA) verwendet werden.
Schätzung einer mittleren Bitfehlerwahrscheinlichkeit $P_\nu$ pro Signalfolge $z_\nu[k]$ der Länge K, mit

$$M_\nu = P_\nu = \frac{1}{K} \cdot \sum_{k=0}^{K-1} p_\nu[k], \ \nu \in \{0, 1, ...., N-1\}, \tag{4}$$

$p_\nu[k]$: geschätzte Fehlerwahrscheinlichkeit für das k-te Symbol der Datensequenz

Soft-Output oder Hard-Output Entzerrung:

Bei Hard-Output Entzerrung werden nur Schätzwerte für die Datensymbole berechnet. Durch Auswahl der Datensymbole mit den höchsten Wahrscheinlichkeiten kann auch bei Soft-Output Entzerrung Hard Output gebildet werden.
Schätzung der mittleren Störvarianz $V_\nu$ pro Signalfolge $z_\nu[k]$ durch Differenzbildung zwischen Signalfolge $z_\nu[k]$ und zugehörigem rekonstruierten Nutzsignal-Anteil $\hat{u}_\nu[k]$. Unter Voraussetzung eines linearen Übertragungssystems gilt:

$$M_\nu = V_\nu = \frac{1}{K} \cdot \sum_{k=0}^{K-1} |z_\nu[k] - \hat{u}_\nu[k]|^2 = \frac{1}{K} \cdot \sum_{k=0}^{K-1} \left| z_\nu[k] - \sum_{\mu=0}^{L_\nu-1} \hat{a}_\nu[k-\mu] \cdot \hat{h}_\nu[\mu] \right|^2, \tag{5}$$

mit

$\hat{a}_\nu[k]$: geschätztes k-tes Sendesymbol der Folge $z_\nu[k]$ (entweder hard-decision oder soft-decision),
$\hat{h}_\nu[k]$: geschätzte zeitdiskrete Gesamtimpulsantwort zur Folge $z_\nu[k]$,
$L_\nu$: Anzahl der Koeffizienten der Impulsantwort $\hat{h}_\nu[k]$

Diese Größe fällt mit Ausnahme des Skalierungsfaktors 1/K bei Entzerrung mittels MLSE, RSSE, DFSE bzw. DFE automatisch als akkumulierte Metrik des geschätzten Pfades durch das Trellisdiagramm des Entzerralgorithmus ab und bietet sich daher als relativ aufwandsgünstige Lösung an.
Die oben beschriebenen Metriken sind nur als Beispiele aufzufassen; prinzipiell kann eine Vielzahl von weiteren Metriken konstruiert werden, die den gewünschten monotonen Zusammenhang zur Zuverlässigkeit der geschätzten Datensequenz aufweisen.
Bezüglich der Anzahl der entzerrten Sendesymbole ist nicht notwendigerweise die gesamte Symbolsequenz innerhalb eines Blockes auszuwerten. In Abhängigkeit von den Parametern des jeweiligen Anwendungsfalles genügt somit unter Umständen die Entzerrung nur eines Teils eines jeden Signalblockes zur Erzielung einer hinreichend hohen Genauigkeit des Schätzwertes für den Frequenzoffset (bzw. niedrigen Fehlervarianz). Zum Beispiel kann bei Anwendung des Verfahrens in einem Empfänger für das GSM-System eine Auswertung innerhalb eines Teilblockes, welcher unter anderem die Trainingssequenz enthält, genügen.

5.) Bestimmung eines Schätzwertes für den Frequenzoffset durch Auswertung der Metriken

Nach Durchführung von Schritt 4 liegen für die N Frequenzverschiebungen $f_\nu$ jeweils skalare Metriken $M_\nu$ vor, aus denen nun ein Schätzwert für den Frequenzoffset bestimmt wird, vgl. Figur 4. Für $\Delta fT \ll 1$ gilt für das Ausgangssignal der Vorverarbeitungsstufe näherungsweise

$$z[k] = \widetilde{z}[k] \cdot e^{j2\pi \Delta f kT}, \qquad (6)$$

wobei $\widetilde{z}[k]$ das Signal nach der Vorverarbeitungsstufe bei idealer Frequenzsynchronisation darstellt. Somit ergibt sich für das v-te Empfangssignalderivat

$$z_v[k] = \widetilde{z}[k] \cdot e^{j2\pi(\Delta f + f_v)kT}, \qquad (7)$$

womit für das Empfangssignalderivat $z_v[k]$ ein effektiver Frequenzoffset $\Delta f + f_v$ wirksam ist. Da sich ein Frequenzoffset degradierend auf die Zuverlässigkeit der Entzerrung auswirkt, kann bei kontinuierlicher Variation der Frequenzverschiebung f erwartet werden, daß sich das Minimum der zugehörigen Metriken M(f) für f = -$\Delta$f ergibt. Somit läßt in diesem Fall die Lage des Minimums der Kurve M(f) direkt einen Rückschluß auf den vorliegenden Frequenzoffset zu. Werden, wie in der Praxis unvermeidlich, nur diskrete Frequenzen $f_v$ betrachtet, so kann durch die Bestimmung des Arguments des Minimums der Folge $M_v = M(f_v)$ ebenfalls ein zuverlässiger Schätzwert für den Frequenzoffset gewonnen werden, sofern eine hinreichend große Anzahl N von diskreten Frequenzverschiebungen gewählt wird. Ein Schätzwert noch höherer Güte kann im diskreten Fall gewonnen werden, wenn anhand der Wertepaare ($f_v$, $M_v$) eine Kurve G(f) berechnet und das zu deren Minimum gehörige Argument als Schätzwert für den (negativen) Frequenzoffset gewählt wird.

Zur Herleitung einer günstigen Kurve G(f) wird zuerst wieder eine kontinuierliche Variation der Frequenzverschiebung *f* angenommen. Somit werden nun Folgen

$$z^f[k] = \widetilde{z}[k] \cdot e^{j2\pi(\Delta f + f)kT} \qquad (8)$$

betrachtet, vgl. Gl. (7). Wird die Pfadmetrik des besten Pfades eines Viterbi-Entzerrers als Metrik M(f) gewählt, so kann M(f) bei korrekter Detektion der gesendeten Datensymbole durch

$$M(f) = \frac{1}{K} \sum_{k=0}^{K-1} \left| (\overline{z}[k] + n[k]) \cdot e^{j2\pi(\Delta f + f)kT} - \overline{z}[k] \right|^2$$

$$\approx \frac{1}{K} \sum_{k=0}^{K-1} \left| \overline{z}[k] \cdot (e^{j2\pi(\Delta f + f)kT} - 1) \right|^2 + \frac{1}{K} \sum_{k=0}^{K-1} |n[k]|^2 \qquad (9)$$

genähert werden, wobei $\overline{z}[k]$ den rauschfreien Anteil des Signals $\widetilde{z}[k]$ bezeichnet und $n[k]$ den Störanteil nach der Vorverarbeitung. Dabei wurde

$$\frac{1}{K} \sum_{k=0}^{K-1} \overline{z}[k] \cdot (e^{j2\pi(\Delta f + f)kT} - 1) \cdot n^*[k] \to 0 \qquad (10)$$

angenommen, was für $K \gg 1$ gerechtfertigt ist (•bedeutet komplexe Konjugation). Unter Verwendung der Näherung $e^x = 1 + x$ für $|x| \ll 1$ kann (9) zu

$$M(f) \approx \frac{(2\pi T)^2}{K} \sum_{k=0}^{K-1} |\overline{z}[k]|^2 k^2 \cdot (\Delta f + f)^2 + \frac{1}{K} \sum_{k=0}^{K-1} |n[k]|^2 \qquad (11)$$

umgeformt werden. Somit hat sich ein Ausdruck der Form

$$G(f) = a \cdot f^2 + b \cdot f + c \qquad (12)$$

ergeben, mit geeigneten Konstanten a>0, b,c > 0 und damit die Gleichung einer nach oben geöffneten Parabel. Somit bietet sich für eine feinere Schätzung des Frequenzoffsets an, anhand der Wertepaare $(f_v, M_v)$ eine geeignete Parabel zu bestimmen, wobei deren Scheitelpunkt (d.h. das Argument für das G(f) minimiert wird) $-b/(2a)$ direkt als Schätzwert $-\Delta f$ für $-\Delta f$ dienen kann. Als Kriterium zur Ermittlung der Parabel kann beispielsweise die Summe der Fehlerquadrate

$$\sum_{v=0}^{N-1} \left| G(f_v) - M_v \right|^2$$

herangezogen werden. Die Minimierung dieses Kriteriums mit Regressionsrechnung führt auf ein lineares Gleichungssystem zur Ermittlung der Parameter $a,b,c$.

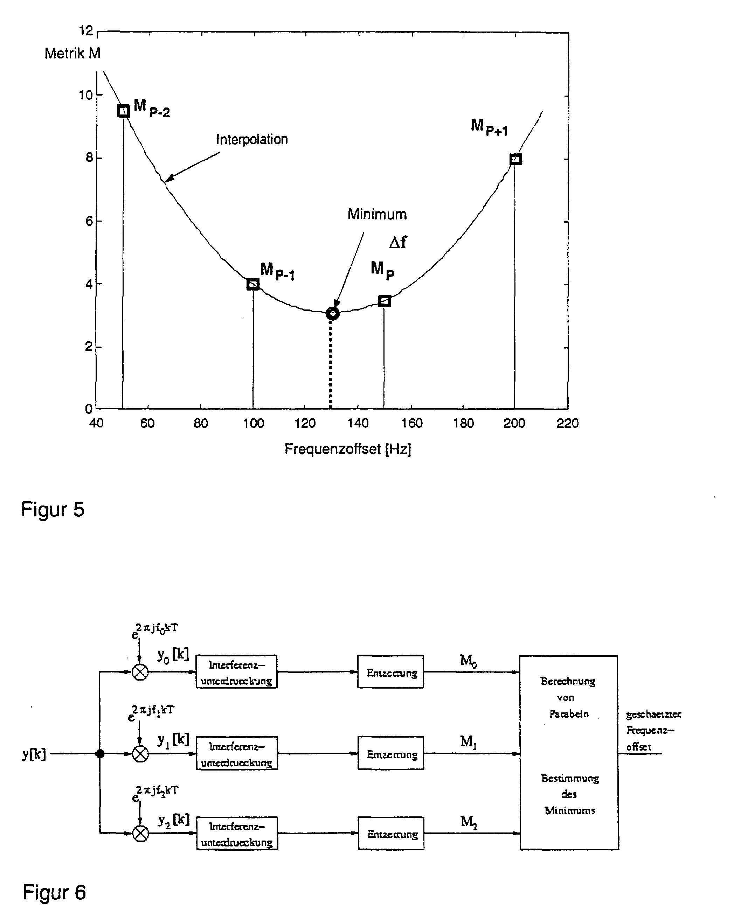

Alternativ kann die Kennlinie $G(f)$ auch als Polynom höheren Grades, transzendente Funktion etc. angesetzt werden, was Vorteile bietet, falls die Metriken $M_v$ nicht einem Viterbi-Entzerrer entnommen werden, sondern gemäß Gl. (4) als mittlere Bitfehlerwahrscheinlichkeiten oder gemäß einer anderen Vorschrift gewählt werden, da sich der tatsächliche Metrikverlauf dann besser approximieren läßt. Zur Bestimmung der Parameter der Funktion $G(f)$ können prinzipiell beliebige Verfahren zur Kurveninterpolation verwendet werden. Die generelle Vorgehensweise zur Schätzung des Frequenzoffsets anhand der Kurve $G(f)$ ist in Figur 5 veranschaulicht.

Mit Bezug auf Figur 6 wird als Ausführungsbeispiel eines erfindungsgemäßen Systems eine Frequenzoffsetschätzung für eine Übertragung über einen verzerrenden Kanal bei Vorliegen einer Interferenzstörung betrachtet. Es wird eine Frequenzoffsetschätzung nach dem vorgeschlagenen Verfahren vorgenommen, wobei zur Vorverarbeitung vor N verschiedenen trellisbasierten Entzerrungen und Kanalschätzungen jeweils eine Interferenzunterdrückung nach der Lehre der EP 00128664.0 derselben Anmelder wie der vorliegenden Erfindung mit dem Titel "Verfahren zur Interferenzunterdrückung für TDMA- und/oder FDMA-Übertragung" stattfindet. Den N Entzerrungen und Kanalschätzungen werden die Ausgangssignale der Interferenzunterdrückungsverfahren $z_v[k]$, $v \in \{0,1,...,N-1\}$, zugeführt. Zur Erreichung einer hohen Leistungsfähigkeit bei moderater Systemkomplexität kann z.B. N zu 3 gewählt werden, wobei zur Gewinnung des Schätzwertes für den Frequenzoffset eine Nachbearbeitung der Wertepaare $(f_0,M_0)$, $(f_1,M_1)$, $(f_2,M_2)$ gemäß einer Parabelkennlinie erfolgt, die anhand der drei Wertepaare eindeutig festgelegt ist. Nach der Offsetschätzung wird eine Offsetkompensation vorgenommen. Das um den Frequenzoffset bereinigte Signal wird einer herkömmlichen trellisbasierten Entzerrung zugeführt.

Liste der verwendeten Formelzeichen:

f:  Frequenz
$\Delta f$:  Frequenzoffset
$\Delta f$:  geschätzter Frequenzoffset
$\Delta f_{max}$:  maximal auftretender Frequenzoffset
$f_v$:  diskrete Frequenzverschiebung
N:  Anzahl der Frequenzverschiebungen
y(t):  zeitkontinuierliches Empfangssignal
y[k]:  zeitdiskretes Empfangssignal
$\tilde{y}[k]$:  Empfangssignal bei Frequenzoffsetfreiheit
$\bar{y}[k]$:  zugehöriges rauschfreies Signal
$y_v(t)$:  zeitkontinuierliches Empfangssignalderivat
$y_v[k]$:  zeitdiskretes Empfangssignalderivat
z[k]:  Empfangssignal nach Interferenzunterdrückung
$\tilde{z}[k]$:  Empfangssignal nach Interferenzunterdrückung bei Frequenzoffsetfreiheit
$\bar{z}[k]$:  zugehöriger rauschfreier Signalanteil
n[k]:  Störanteil
$z_v[k]$:  Signalderivat nach Interferenzunterdrückung

$z^f[k]$:      Signalderivat nach Interferenzunterdrückung bei kontinuierlicher Variation der Frequenzverschiebung

$M_v$:      Metrik

$M(f)$:      Metrik bei kontinuierlicher Variation der Frequenzverschiebung

$T$:      Symbolintervall

$G(f)$:      Funktion zur Interpolation

$K$:      Länge der ausgewerteten Sequenz

$\hat{a}_v[k]$:      geschätztes k-tes Sendesymbol der Folge $z_v[k]$

$h_v[k]$:      geschätzte zeitdiskrete Gesamtimpulsantwort zur Folge $z_v[k]$

$L_v$:      Anzahl der Koeffizienten der Impulsantwort $h_v[k]$

**Patentansprüche**

1. Verfahren zur Frequenzoffsetschätzung für TDMA-, Time-Division Multiple Access, und/oder FDMA-, Frequency-Division Multiple Access, Übertragung, die zumindest näherungsweise durch Pulsamplitudenmodulation beschreibbar ist **und bei der die erste Nyquistbedingung nicht erfüllt ist,** folgende Schritte umfassend:

   - Bildung einer Anzahl N von weiteren Varianten des Empfangssignals, sogenannte Empfangssignal-Derivate ($z_v[k]$), durch N unterschiedliche diskrete Frequenzverschiebungen ($f_v$) des ursprünglichen Empfangssignals (y),
   - Aufbereitung der Empfangssignal-Derivate ($z_v[k]$) für eine Rückgewinnung der Sendesymbolfolge durch **eine trellisbasierte** Entzerrung;
   - Durchführung der **trellisbasierten** Entzerrung der N Empfangssignal-Derivate ($z_v[k]$);
   - Bestimmung von N Metriken ($M_v$) für die N Empfangssignal-Derivate im Zuge der **trellisbasierten** Entzerrung, welche die Zuverlässigkeit der geschätzten Sendesymbole zumindest näherungsweise widerspiegeln; und
   - Bestimmung eines Schätzwerts für den Frequenzoffset ($F_{est}$) durch Auswertung der N Metriken ($M_v$) in Verbindung mit den zugehörigen Frequenzverschiebungen ($f_v$).

2. Verfahren nach Anspruch 1,
   **dadurch gekennzeichnet,**
   **daß** die Empfangssignal-Derivat ($z_v[k]$) unmittelbar aus dem zeitkontinuierlichen Empfangssignal gebildet werden.

3. Verfahren nach Anspruch 1,
   **dadurch gekennzeichnet,**
   **daß** die Bildung von Empfangssignal-Derivaten ($z_v[k]$) erst nach der Abtastung des zeit-kontinuierlichen Empfangssignals erfolgt.

4. Verfahren nach Anspruch 1 oder 3,
   **dadurch gekennzeichnet,**
   **daß** die Bildung von Ernptangssignal-Derivaten ($z_v[k]$) erst nach einer zeitdiskreten Vorverarbeitung nach der Abtastung zum Zwecke der Unterdrückung von Störungen, insbesondere von Interferenzen, erfolgt.

5. Verfahren nach einem der vorhergehenden Ansprüche,
   **dadurch gekennzeichnet,**
   **daß** ein Schätzwert für den Frequenzoffset ($F_{est}$) mittels des Extremwerts einer Kurve gebildet wird, die anhand der mit den N Entzerrungen gewonnenen Metriken ($M_v$) und der zugehörigen Frequenzverschiebungen ($f_v$) bestimmt wird.

6. Verfahren nach Anspruch 5,
   **dadurch gekennzeichnet,**
   **daß** der Extremwert vom Scheitelpunkt einer Parabel gebildet wird.

7. Verfahren nach einem der vorhergehenden Ansprüche,
   **dadurch gekennzeichnet,**
   **daß** die Bildung und die Entzerrung der Empfangssignal-Derivate ($z_v[k]$) nur in einem Teilbereich des empfangenen Signalblocks erfolgt.

8. System zur Frequenzoffsetschätzung für TDMA und/oder FDMA-Übertragung, die zumindest näherungsweise durch Pulsamplitudenmodulation beschreibbar ist **und bei der die erste Nyquistbedingung nicht erfüllt ist,** mit:

- einer Vorrichtung zur Bildung einer Anzahl N von weiteren Varianten des Empfangssignals, sogenannte Empfangssignal-Derivate ($Z_v[k]$) durch N unterschiedliche diskrete Frequenzverschiebungen ($f_v$) des ursprünglichen Empfangssignals (y);
- einer Vorrichtung zur Aufbereitung der Empfangssignal-Derivate ($Z_v[k]$) für eine Rückgewinnung der Sendesymbolfolge durch **trellisbasierte** Entzerrung;
- einer Vorrichtung zur Durchführung der **trellisbasierten** Entzerrung der N Empfangssignal-Derivate ($z_v[k]$);
- eine Vorrichtung zur Bestimmung von N Metriken ($M_v$) für die N Empfangssignal-Derivate im Zuge der **trellisbasierten** Entzerrung, welche die Zuverlässigkeit der geschätzten Sendesymbole zumindest näherungsweise widerspiegeln; und
- einer Vorrichtung zur Bestimmung eines Schätzwerts für den Frequenzoffset ($F_{est}$) durch Auswertung der N Metriken ($M_v$) in Verbindung mit den zugehörigen Frequenzverschiebungen ($f_v$).

## Claims

1. Method for frequency offset estimation for TDMA, time division multiple access, and/or FDMA, frequency division multiple access, transmission, which can be at least approximately modeled as pulse amplitude modulation and in which the first Nyquist condition is not fulfilled, comprising the following steps:

   - Forming a number N of further variants of the received signal, so-called derivatives of the received signal ($z_\upsilon[k]$), by N different discrete frequency shifts ($f_\upsilon$) of the original received signal (y);
   - Processing the derivatives of the received signal ($z_\upsilon[k]$) for reconstruction of the transmitted symbol sequence through a trellis-based equalization;
   - Performing the trellis-based equalization of the N derivatives of the received signal ($z_\upsilon[k]$);
   - Determining N metrics ($M_\upsilon$) for the N derivatives of the received signal in the course of the trellis-based equalization reflecting at least approximately the reliability of the estimated transmitted symbols; and
   - Determining an estimate for the frequency offset ($F_{est}$) by analysing the N metrics ($M_\upsilon$) in connection with the corresponding frequency shifts ($f_\upsilon$);

2. Method according to claim 1,
   **characterized in that**
   the derivatives of the received signal ($z_\upsilon[k]$) are formed directly from the continuous-time received signal.

3. Method according to claim 1,
   **characterized in that**
   the derivatives of the received signal ($z_\upsilon[k]$) are formed only after sampling of the continuous-time received signal.

4. Method according to claim 1 or 3,
   **characterized in that**
   the time derivatives of the received signal ($z_\upsilon[k]$) are formed only after a discrete-time preprocessing carried out after sampling for the purpose of suppressing impairments, in particular interferences.

5. Method according to one of the preceding claims
   **characterized in that**
   an estimate for the frequency offset ($F_{est}$) is formed by means of the extreme value of a curve which is determined on the basis of the N metrics ($M_\upsilon$) obtained by N equalizations and the corresponding frequency shifts ($f_\upsilon$).

6. Method according to claim 5,
   **characterized in that**
   the extreme value is formed from the apex of a parabola.

7. Method according to one of the preceding claims,
   **characterized in that**
   the generation and the equalization of the derivatives of the received signal ($z_\upsilon[k]$) are performed only in a partial area of the received signal block.

8. System for frequency offset estimation for TDMA and/or FDMA transmission, which can be at least approximately modeled as pulse amplitude modulation and where the first Nyquist condition is not fulfilled, comprising:

   - a device for forming a number N of further variants of the received signal, so-called derivatives of the received signal ($z_\upsilon[k]$), by N different discrete frequency shifts ($f_\upsilon$) of the original received signal y;
   - a device for processing the derivatives ($z_\upsilon[k]$) for reconstruction of the transmitted symbol sequence through trellis-based equalization;
   - a device for performing the trellis-based equalization of the N derivatives ($z_\upsilon[k]$);
   - a device for determining N metrics ($M_\upsilon$) for the N derivatives of the received signal in the course of the trellis-based equalization reflecting at least approximately the reliability of the estimated transmitted symbols; and
   - a device for determining an estimate for the frequency offset ($F_{est}$) by processing the N metrics ($M_\upsilon$) in connection with the corresponding frequency shifts ($f_\upsilon$).

**Revendications**

1. Procédé d'estimation de décalage de fréquence de transmission TDMA, Time Division Multiple Access, et/ou FDMA, Frequency Division Multiple Access, pouvant être décrite au moins par approximation par une modulation d'amplitude d'impulsion et dans laquelle la première condition de Nyquist n'est pas remplie, comprenant les étapes suivantes :

   - formation d'un nombre N d'autres variantes du signal de réception, de ce qu'on appelle des dérivées du signal de réception ($z_\upsilon[k]$), par N décalages de fréquence discrets différents ($f_\upsilon$) du signal initial de réception (y) ;
   - préparation des dérivées du signal de réception ($z_\upsilon[k]$) pour une récupération de la suite de symboles d'émission par une égalisation **de** type Trellis ;
   - exécution de l'égalisation **de type Trellis** des N dérivées du signal de réception ($z_\upsilon[k]$) ;
   - détermination de N métriques ($M_\upsilon$) pour les N dérivées du signal de réception à la suite de l'égalisation de **type Trellis** qui reflètent au moins par approximation la fiabilité des symboles d'émission estimés, et
   - détermination d'une valeur estimée du décalage de fréquence ($F_{est}$) par exploitation des N métriques ($M_\upsilon$) en liaison avec les décalages de fréquence correspondants ($f_\upsilon$).

2. Procédé selon la revendication 1,
   **caractérisé en ce que**
   les dérivées du signal de réception ($z_\upsilon[k]$) sont formées directement à partir du signal de réception constant dans le temps.

3. Procédé selon la revendication 1
   **caractérisé en ce que**
   la formation de dérivées du signal de réception ($z_\upsilon[k]$) ne s'effectue qu'après l'échantillonnage du signal de réception constant dans le temps.

4. Procédé selon la revendication 1 ou 3,
   **caractérisé en ce que**
   la formation de dérivées du signal de réception ($z_\upsilon[k]$) ne s'effectue qu'après un pré-traitement en temps discret après l'échantillonnage dans le but de supprimer des perturbations, en particulier des interférences.

5. Procédé selon l'une quelconque des revendications précédentes,
   **caractérisé en ce que**
   une valeur estimée du décalage de fréquence ($F_{est}$) est formée au moyen de la valeur extrême d'une courbe qui est déterminée à l'aide des métriques ($M_\upsilon$) acquises par les N égalisations et les décalages de fréquence ($f_\upsilon$) correspondants.

6. Procédé selon la revendication 5,
   **caractérisé en ce que**
   la valeur extrême se constitue du sommet d'une parabole.

7. Procédé selon l'une quelconque des revendications précédentes,
   **caractérisé en ce que**

la formation et l'égalisation des dérivées du signal de réception ($z_\upsilon$ [k]) ne s'effectuent que dans un domaine partiel du bloc de signal reçu.

8.  Système d'estimation de décalage de fréquence de transmission TDMA et/ou FDMA pouvant être décrite au moins par approximation par une modulation d'amplitude d'impulsion et dans laquelle la première condition de Nyquist n'est pas remplie, comprenant :

    - un dispositif de formation d'un nombre N d'autres variantes du signal de réception, de ce qu'on appelle des dérivées du signal de réception ($z_\upsilon$ [k]), par N décalages de fréquence discrets différents ($f_\upsilon$) du signal initial de réception (y) ;
    - un dispositif de préparation des dérivées du signal de réception ($z_\upsilon$ [k]) pour une récupération de la suite de symboles d'émission par une égalisation de type Trellis ;
    - un dispositif d'exécution de l'égalisation **de type Trellis** des N dérivées du signal de réception ($z_\upsilon$ [k]) ;
    - un dispositif de détermination de N métriques ($M_\upsilon$) pour les N dérivées du signal de réception à la suite de l'égalisation **de type** Trellis qui reflètent au moins par approximation la fiabilité des symboles d'émission estimés, et
    - un dispositif de détermination d'une valeur estimée du décalage de fréquence ($F_{est}$) par exploitation des N métriques ($M_\upsilon$) en liaison avec les décalages de fréquence correspondants ($f_\upsilon$).

EP 1 313 281 B1

Figur 1

Figur 2

$e^{2\pi j \cdot f_0 kT}$

$z_0[k]$

Ent-zerrung

Metrik-berechnung

$M_0$

$e^{2\pi j \cdot f_1 kT}$

$z_1[k]$

Ent-zerrung

Metrik-berechnung

$M_1$

y[k]

Vor-verarbeitung

z[k]

$e^{2\pi j \cdot f_{N-2} kT}$

$z_{N-2}[k]$

Ent-zerrung

Metrik-berechnung

$M_{N-2}$

$e^{2\pi j \cdot f_{N-1} kT}$

$z_{N-1}[k]$

Ent-zerrung

Metrik-berechnung

$M_{N-1}$

Figur 3

$M_0$

$M_1$

$M_{N-2}$

$M_{N-1}$

Frequenz-offset-schätzung

$F_{est}$

Figur 4

Figur 5

Figur 6